# EUROPÄISCHE PATENTSCHRIFT

(11) **EP 0 778 295 B1**
(45) Veröffentlichungstag und Bekanntmachung des Hinweises auf die Patenterteilung: **23.02.2005**
(21) Anmeldenummer: 96119036.0
(22) Anmeldetag: 28.11.1996
(51) Int. Cl.: C08F 210/06

(54) **Verbesserte statistische Propylenpolymerisate**
Improved statistical propylene copolymers
Copolymères statistiques du propylène améliorés

(30) Priorität: 06.12.1995 DE 19545499
(43) Veröffentlichungstag der Anmeldung: 11.06.1997
(73) Patentinhaber: Novolen Technology Holdings C.V., 2596 JJ Den Haag (NL)
(72) Erfinder: Hüffer, Stephan, Dr., 67071 Ludwigshafen (DE); Kersting, Meinolf, Dr., 67435 Neustadt (DE); Langhauser, Franz, Dr., 67098 Bad Dürkheim (DE); Werner, Rainer Alexander, Dr., 67098 Bad Dürkheim (DE); Müller, Patrik, Dr., 67661 Kaiserslautern (DE); Kerth, Jürgen, Dr., 67316 Carlsberg (DE)
(74) Vertreter: De Hoop, Eric

(56) Entgegenhaltungen:
- EP-A- 0 450 456
- EP-A- 0 761 696
- WO-A-96/05236
- DE-A- 4 317 654

## Beschreibung

Die vorliegende Erfindung betrifft ein Verfahren zur Herstellung von statistischen Propylencopolymerisate mit einpolymerisierten C₂-C₁₀-Alk-1-enen, erhältlich durch Polymerisation von Propylen und C₂-C₁₀-Alk-1-enen in Gegenwart eines Ziegler-Natta-Katalysatorsystems aus a) einer titanhaltigen Feststoffkomponente, die eine Verbindung des Magnesiums, ein Halogen, Kieselgel als Träger und einen Carbonsäureester als Elektronendonorverbindung aufweist, sowie als Cokatalysatoren b) eine Aluminiumverbindung und c) eine weitere Elektronendonorverbindung enthält, wobei man bei Temperaturen im Bereich von 50 bis 100°C, Drücken im Bereich von 15 bis 40 bar und mittleren Verweilzeiten von 0,5 bis 5 Stunden Propylen und die C₂-C₁₀-Alk-1-ene miteinander polymerisiert, ein Partialdruckverhältnis zwischen Propylen und dem oder den C₂-C₁₀-Alk-1-enen von 2:1 bis 100:1 einstellt und ein Kieselgel als Träger der titanhaltigen Feststoffkomponente verwendet, welches einen mittleren Teilchendurchmesser von 5 bis 200 µm, einen mittleren Teilchendurchmesser der Primärpartikel von 1 bis 10 µm und Hohlräume bzw. Kanäle mit einem mittleren Durchmesser von 1 bis 10 µm aufweist, deren makroskopischer Volumenanteil am Gesamtpartikel im Bereich von 5 bis 20 % liegt.

Katalysatorsysteme vom Typ der Ziegler-Natta-Katalysatoren sind u.a. aus der EP-B 014523, der EP-A 023425, der EP-A 045975 und der EP-A 195497 bekannt. Diese Systeme werden insbesondere zur Polymerisation von C₂-C₁₀-Alk-1-enen verwendet und enthalten u.a. Verbindungen des mehrwertigen Titans, Aluminiumhalogenide und/oder -alkyle, sowie Elektronendonorverbindungen, insbesondere Siliciumverbindungen, Ether, Carbonsäureester, Ketone und Lactone, die einerseits in Verbindung mit der Titankomponente und andererseits als Cokatalysator verwendet werden.

Die Herstellung der Ziegler-Natta Katalysatoren geschieht üblicherweise in zwei Schritten. Zuerst wird die titanhaltige Feststoffkomponente hergestellt. Anschließend wird diese mit dem Cokatalysator umgesetzt. Mit Hilfe der so erhaltenen Katalysatoren wird anschließend die Polymerisation durchgeführt.

Weiterhin werden in der US-A 48 57 613 und der US-A 52 88 824 Katalysatorsysteme vom Typ der Ziegler-Natta-Katalysatoren beschrieben, die neben einer titanhaltigen Feststoffkomponente und einer Aluminiumverbindung noch organische Silanverbindungen als externe Elektronendonorverbindungen aufweisen. Die dabei erhaltenen Katalysatorsysteme zeichnen sich u.a. durch eine gute Produktivität aus und liefern Polymerisate des Propylens mit einer hohen Stereospezifität, d.h. einer hohen Isotaktizität, einem geringen Chloranteil und einer guten Morphologie, d.h. einem geringen Anteil an Feinstkorn.

Für einige Anwendungsbereiche von Polymerisaten des Propylens ist es erforderlich, daß diese sich u.a. durch eine hohe Steifigkeit und nur geringe Anteile an xylollöslichen Polymerisatpartikeln auszeichnen. Dies gilt beispielsweise für Lebensmittelfolien, die aus derartigen Polymerisaten des Propylens hergestellt werden.

Die aus der US-A 48 57 613 und der US-A 52 88 824 bekannten Polymerisate des Propylens erfüllen diese Anforderungen nicht in ausreichendem Maße.

Der vorliegenden Erfindung lag daher die Aufgabe zugrunde, ausgehend von den aus der US-A 48 57 613 und der US-A 52 88 824 beschriebenen Polymerisaten des Propylens nochmals ein verbessertes Verfahren zur Herstellung von Polymerisaten des Propylens zu entwickeln, welche die obengenannten Nachteile nicht aufweisen.

Demgemäß wurden das eingangs definierte Verfahren zur Herstellung von statistischen Propylencopolymerisate gefunden.

Die erfindungsgemäßen Verfahren zur Herstellung von statistischen Propylencopolymerisaten wird durchgeführt durch Polymerisation in Gegenwart eines Ziegler-Natta-Katalysatorsystems aus einer titanhaltigen Feststoffkomponente a), die eine Verbindung des Magnesiums, ein Halogen, Kieselgel als Träger und einen Carbonsäureester als Elektronendonorverbindung aufweist, sowie als Cokatalysatoren über eine Aluminiumverbindung b) und eine weitere Elektronendonorverbindung c) verfügt.

Zur Herstellung der titanhaltigen Feststoffkomponente a) werden als Titanverbindungen im allgemeinen Halogenide oder Alkoholate des drei- oder vierwertigen Titans verwendet, wobei die Chloride des Titans, insbesondere Titantetrachlorid, bevorzugt sind. Die titanhaltige Feststoffkomponente enthält ferner Kieselgel als Träger.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxy verbindungen in Betracht, wobei bevorzugt Magnesiumdichlorid, Magnesiumdibromid und Magnesiumdi-(C₁-C₁₀-alkyl)-Verbindungen verwendet werden. Daneben kann die titanhaltige Feststoffkomponente noch Halogen, bevorzugt Chlor oder Brom, enthalten.

Ferner enthält die titanhaltige Feststoffkomponente a) noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel (II) 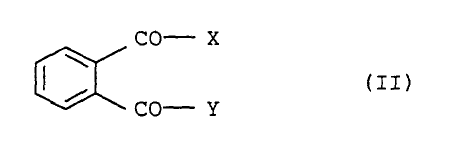 verwendet, wobei X und Y jeweils für ein Chloratom oder einen C₁- bis C₁₀-Alkoxyrest oder gemeinsam für Sauerstoff stehen. Besonders bevorzugte Elektronendonorverbindungen sind Phthalsäureester, wobei X und Y einen C₁-C₈-Alkoxyrest, beispielsweise einen Methoxy-, Ethoxy-, Propyloxy- oder einen Butyloxyrest bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von gegebenenfalls substituierten Benzophenon-2-carbonsäuren. Als Hydroxyverbindungen werden bei diesen Estern die bei Veresterungsreaktionen üblichen Alkohole verwendet, u.a. C₁-bis-C₁₅-Alkanole, C₅-bis-C₇-Cycloalkanole, die ihrerseits C₁-bis C₁₀-Alkylgruppen tragen können, ferner C₆-bis-C₁₀-Phenole.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066, der US-A 48 57 613 und der US-A 52 88 824 beschrieben.

Bei der Herstellung der titanhaltigen Feststoffkomponente a) wird bevorzugt folgendes zweistufige Verfahren angewandt:

In der ersten Stufe versetzt man zunächst als feinteiligen Träger Kieselgel (SiO₂), welches in der Regel einen mittleren Teilchendurchmesser von 5 bis 200 µm, insbesondere von 20 bis 70 µm, ein Porenvolumen von 0,1 bis 10 cm³/g, insbesondere von 1,0 bis 4,0 cm³/g, und eine spezifische Oberfläche von 10 bis 1000 m²/g, insbesondere von 100 bis 500 m²/g, aufweist, mit einer Lösung der magnesiumhaltigen Verbindung in einem flüssigen Alkan, wonach man dieses Gemisch 0,5 bis 5 Stunden lang bei einer Temperatur zwischen 10 und 120°C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten fügt man diesem Reaktionsprodukt bei einer Temperatur zwischen 10 und 150°C ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung hinzu. Dabei setzt man pro Mol Magnesium des aus der ersten Stufe erhaltenen Feststoffs 1 bis 5 mol des drei- oder vierwertigen Titans und 0,01 bis 1 mol, insbesondere 0,2 bis 0,6 mol, der Elektronendonorverbindung ein. Dieses Gemisch wird wenigstens 30 Minuten lang bei einer Temperatur zwischen 10 und 150°C gerührt, der so erhaltene feste Stoff anschließend abfiltriert und mit einem C₇- bis C₁₀-Alkylbenzol, bevorzugt mit Ethylbenzol, gewaschen.

In der zweiten Stufe extrahiert man den aus der ersten Stufe erhaltenen Feststoff wenigstens eine Stunde lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit einem Cokatalysator als Ziegler-Natta-Katalysatorsystem verwendet. Als Cokatalysator kommt dabei u.a. eine Aluminiumverbindung b) in Frage.

Als Cokatalysatoren geeignete Aluminiumverbindungen b) sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung b) noch als weiteren Cokatalysator Elektronendonorverbindungen c) wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonorverbindungen sind dabei siliciumorganische Verbindungen der allgemeinen Formel (I)

R¹ ₙSi(OR²)₄₋ₙ (I)

wobei
R¹ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe bedeutet, R² gleich oder verschieden ist und einer C₁- bis C₂₀-Alkylgruppe entspricht und n für die Zahlen 1, 2 oder 3 steht. Besonders bevorzugt werden dabei solche Verbindungen, in denen R¹ eine C₁- bis C₈-Alkylgruppe oder eine 5- bis 7-gliedrige Cycloalkylgruppe, sowie R² eine C₁- bis C₄-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan, Dimethoxyisobutylsec.butylsilan, Dimethoxyisopropylsec. butylsilan, Diethoxydicyclopentylsilan und Diethoxyisobutylisopropylsilan hervorzuheben.

Die einzelnen Verbindungen b) sowie gegebenenfalls c) können in beliebiger Reihenfolge einzeln oder als Gemisch zweier Komponenten als Cokatalysator verwendet werden.

Erfindungsgemäß wird in der titanhaltigen Feststoffkomponente a) ein solches feinteiliges Kieselgel verwendet, welches einen mittleren Teilchendurchmesser von 5 bis 200 µm, insbesondere von 20 bis 70 µm und einen mittleren Teilchendurchmesser der Primärpartikel von 1 bis 10 µm, insbesondere von 1 bis 5 µm aufweist. Bei den sogenannten Primärpartikeln handelt es sich dabei um poröse, granuläre Kieselgelpartikel, welche durch Mahlung, gegebenenfalls nach entsprechender Siebung, aus einem SiO₂-Hydrogel erhalten werden.

Weiterhin ist das erfindungsgemäß zu verwendende feinteilige Kieselgel u.a. auch noch dadurch charakterisiert, daß es Hohlräume bzw. Kanäle mit einem mittleren Durchmesser von 1 bis 10 µm, insbesondere von 1 bis 5 µm aufweist, deren makroskopischer Volumenanteil am Gesamtpartikel im Bereich von 5 bis 20 %, insbesondere im Bereich von 5 bis 15 % liegt. Das feinteilige Kieselgel weist ferner insbesondere ein Porenvolumen von 0,1 bis 10 cm³/g, bevorzugt von 1,0 bis 4,0 cm³/g und eine spezifische Oberfläche von 10 bis 1000 m²/g, bevorzugt von 100 bis 500 m²/g auf.

Aufgrund der in dem feinteiligen Kieselgel vorhandenen Hohlräume bzw. Kanäle liegt im Trägermaterial eine deutlich verbesserte Verteilung der Katalysatoraktivkomponenten vor. Darüber hinaus wirkt sich ein derart mit Hohlräumen und Kanälen durchzogenes Material positiv auf die diffusionskontrollierte Versorgung mit Monomeren und Cokatalysatoren und damit auch auf die Polymerisationskinetik aus. Ein solches feinteiliges Kieselgel ist u.a. erhältlich durch Sprühtrocknen von vermahlenem, entsprechend gesiebten SiO₂-Hydrogel, welches hierzu mit Wasser oder einem aliphatischen Alkohol vermaischt wird. Ein solches feinteiliges Kieselgel ist aber auch im Handel erhältlich.

Das Kieselgel liegt dabei innerhalb der titanhaltigen Feststoffkomponente a) bevorzugt in solchen Mengen vor, daß auf 1 Mol des Kieselgels 0,1 bis 1,0 Mol, insbesondere 0,2 bis 0,5 Mol der Verbindung des Magnesiums treffen.

Die als Cokatalysatoren wirkenden Verbindungen b) und c) kann man sowohl nacheinander als auch zusammen auf die titanhaltige Feststoffkomponente a) einwirken lassen. Üblicherweise geschieht dies bei Temperaturen von 0 bis 150°C, insbesondere von 20 bis 90°C und Drücken von 1 bis 100 bar, insbesondere von 1 bis 40 bar.

Bevorzugt werden die Cokatalysatoren b) sowie c) in einer solchen Menge eingesetzt, daß das Atomverhältnis zwischen Aluminium aus der Aluminiumverbindung und Titan aus der titanhaltigen Feststoffkomponente a) 10:1 bis 800:1, insbesondere 20:1 bis 200:1, und das Molverhältnis zwischen der Aluminiumverbindung und der als Cokatalysator eingesetzten Elektronendonorverbindung c) 1:1 bis 250:1, insbesondere 10:1 bis 80:1 beträgt.

Die Herstellung der statistischen Propylencopolymerisate kann in den üblichen, für die Polymerisation von C₂-C₁₀-Alk-1-enen verwendeten Reaktoren entweder absatzweise oder bevorzugt kontinuierlich u.a. als Suspensionspolymerisation oder bevorzugt als Gasphasenpolymerisation durchgeführt werden. Geeignete Reaktoren sind u.a. kontinuierlich betriebene Rührreaktoren, die ein Festbett aus feinteiligem Polymerisat enthalten, welches üblicherweise durch geeignete Rührvorrichtungen in Bewegung gehalten wird. Selbstverständlich kann die Reaktion auch in einer Reihe von mehreren, hintereinander geschalteten Reaktoren durchgeführt werden.

Das erfindungsgemäße Verfahren wird in der Weise durchgeführt, daß man Propylen zusammen mit den C₂-C₁₀-Alk-1-enen bei Temperaturen im Bereich von 50 bis 100°C, Drücken im Bereich von 15 bis 40 bar und mittleren Verweilzeiten von 0,5 bis 5 Stunden polymerisiert. Bevorzugt sind dabei Temperaturen von 60 bis 90°C, Drücke von 20 bis 35 bar und mittlere Verweilzeiten von 0,5 bis 3 Stunden.

Üblicherweise werden dabei die Comonomere Propylen und das oder die C₂-C₁₀-Alk-1-ene in solchen Mengen eingesetzt, daß das Partialdruckverhältnis zwischen Propylen und dem oder den C₂-C₁₀-Alk-1-enen 2:1 bis 100:1, insbesondere 5:1 bis 80:1 beträgt. Unter der Bezeichnung C₂-C₁₀-Alk-1-ene sollen dabei insbesondere Ethylen, But-1-en, Pent-1-en, Hex-1-en, Hept-1-en oder Oct-1-en oder Gemische aus diesen Comonomeren verstanden werden, wobei bevorzugt Ethylen, But-1-en oder Gemische aus Ethylen und But-1-en verwendet werden. Für den Fall, daß man als C₂-C₁₀-Alk-1-en ein Gemisch aus Ethylen und But-1-en einsetzt, sollte das Partialdruckverhältnis zwischen Propylen, Ethylen und But-1-en im Bereich von 2:0,5:1 bis 100:50:1, insbesondere im Bereich von 5:1:1 bis 80:20:1 gehalten werden.

Die Molmasse der statistischen Propylencopolymerisate kann durch Zugabe von in der Polymerisationstechnik gebräuchlichen Reglern, beispielsweise von Wasserstoff, kontrolliert und über einen weiten Bereich eingestellt werden. Weiterhin ist es möglich, inerte Lösungsmittel wie beispielsweise Toluol oder Hexan, Inertgas wie Stickstoff oder Argon und kleinere Mengen Polypropylenpulver mitzuverwenden. Die erfindungsgemäßen statistischen Propylencopolymerisate weisen vorzugsweise Molmassen (Gewichtsmittel) zwischen 20 000 und 500 000 auf. Ihre Schmelzflußindizes, bei 230°C und unter einem Gewicht von 2,16 kg, nach DIN 53735 liegen im Bereich von 0,1 bis 100 g/10 min, insbesondere im Bereich von 0,5 bis 50 g/10 min.

Die nach dem erfindungsgemäßen Verfahren erhaltenen statistischen Propylencopolymerisate zeichnen sich gegenüber den bisher bekannten statistischen Propylencopolymerisaten insbesondere durch abgesenkte xylollösliche Anteile, d.h. eine verbesserte Stereospezifität und eine höhere Steifigkeit aus. Die Produktivität des zur Herstellung dieser statistischen Propylencopolymerisate verwendeten Verfahrens ist gegenüber den aus dem Stand der Technik bekannten Verfahren deutlich erhöht.

Aufgrund ihrer guten mechanischen Eigenschaften eignen sich die erfindungsgemäßen statistischen Propylencopolymerisate vor allem zur Herstellung von Folien, Fasern und Formkörpern.

### Beispiele 1 bis 3 und Vergleichsbeispiele A bis C

### Beispiel 1

### a) Herstellung der titanhaltigen Feststoffkomponente (1)

In einer ersten Stufe wurde feinteiliges Kieselgel (SiO₂₎, das einen Teilchendurchmesser von 20 bis 45 µm, ein Porenvolumen von 1,5 cm³/g und eine spezifische Oberfläche von 260 m²/g aufwies, mit einer Lösung von n-Butyloctylmagnesium in n-Heptan versetzt, wobei pro Mol SiO₂ 0,3 Mol der Magnesiumverbindung eingesetzt wurden. Das feinteilige Kieselgel war zusätzlich durch eine mittlere Teilchengröße der Primärpartikel von 3-5 µm und durch Hohlräume und Kanäle mit einem Durchmesser von 3-5 µm charakterisiert, wobei der makroskopische Volumenanteil der Hohlräume und Kanäle am Gesamtpartikel bei etwa 15 % lag. Die Lösung wurde 45 Minuten bei 95°C gerührt, danach auf 20°C abgekühlt, wonach die 10-fache molare Menge, bezogen auf die magnesiumorganische Verbindung, an Chlorwasserstoff eingeleitet wurde. Nach 60 Minuten wurde das Reaktionsprodukt unter ständigem Rühren mit 3 Mol Ethanol pro Mol Magnesium versetzt. Dieses Gemisch wurde 0,5 Stunden bei 80°C gerührt und anschließend mit 7,2 Mol Titantetrachlorid und 0,5 Mol Di-n-butylphthalat, jeweils bezogen auf 1 Mol Magnesium, versetzt. Anschließend wurde 1 Stunde bei 100°C gerührt, der so erhaltene feste Stoff abfiltriert und mehrmals mit Ethylbenzol gewaschen.

Das daraus erhaltene Festprodukt extrahierte man 3 Stunden lang bei 125°C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.

Die titanhaltige Feststoffkomponente enthielt
3,5 Gew.-% Ti
7,4 Gew.-% Mg
28,2 Gew.-% Cl.

Die Bestimmung des Teilchendurchmessers erfolgte durch Coulter-Counter-Analyse (Korngrößenverteilung der Kieselgelpartikel), die des Porenvolumens und der spezifischen Oberfläche durch Stickstoff-Adsorption nach DIN 66131 oder durch Quecksilber-Porosimetrie nach DIN 66133. Die Bestimmung der mittleren Teilchengröße der Primärpartikel, des Durchmessers der Hohlräume und Kanäle sowie deren makroskopischer Volumenanteil geschah mit der Hilfe der Scanning Electron Mikroscopy (Rasterelektronenmikroskopie) bzw. der Electron Probe Micro Analysis (Elektronenstrahl-Mikrobereichsanalyse) jeweils an Kornoberflächen und an Kornquerschnitten des Kieselgels.

### b) Polymerisation

Die Polymerisation wurde in einem vertikal gerührten Gasphasenreaktor mit einem Nutzvolumen von 800 l in Anwesenheit von Wasserstoff als Molmassenregler bei einer Temperatur von 80°C und unter einem Druck von 23 bar durchgeführt. Der Reaktor enthielt ein bewegtes Festbett aus feinteiligem Polymerisat.

In dem Gasphasenreaktor wurde ein gasförmiges Gemisch aus Propylen und Ethylen eingeleitet, wobei das Verhältnis zwischen dem Partialdruck des Propylens und dem des Ethylens 78:1 betrug. Bei einer mittleren Verweilzeit von 1,5 Stunden wurde mit Hilfe der in Beispiel 1a) beschriebenen titanhaltigen Feststoffkomponente a) kontinuierlich polymerisiert, wobei pro Stunde 7,5 g der titanhaltigen Feststoffkomponente a), 450 m Mol Triethylaluminium und 45 mmol Dimethoxyisobutylisopropylsilan als Cokatalysatoren verwendet wurden.

Nach Beendigung der Gasphasenpolymerisation erhielt man ein statistisches Propylencopolymerisat mit 2,6 Gew.-% einpolymerisiertem Ethylen und einem Schmelzflußindex von 2,4 g/10 min., bei 230°C und 2,16 kg (nach DIN 53735).

### Vergleichsbeispiel A

Es wurde analog zum erfindungsgemäßen Beispiel 1 Propylen und Ethylen mit dem gleichen Katalysatorsystem und unter den gleichen Bedingungen polymerisiert, wobei aber eine solche titanhaltige Feststoffkomponente a) verwendet wurde, die ein granuläres Kieselgel mit folgenden Eigenschaften aufwies:

| | |
|---|---|
| Teilchendurchmesser | 20 bis 45 µm |
| Porenvolumen | 1,8 cm³/g |
| spezifische Oberfläche | 325 m²/g |
| Anteil der Hohlräume und Kanäle am Gesamtpartikel | < 1,0 % |

Nach Beendigung der Gasphasenpolymerisation erhielt man ein statistisches Propylencopolymerisat mit 2,4 Gew.-% einpolymerisiertem Ethylen und einem Schmelzflußindex von 2,7 g/10 min., bei 230°C und 2,16 kg (nach DIN 53 735).

### Beispiel 2

Das erfindungsgemäße Beispiel 1 wurde analog wiederholt, wobei bei einer mittleren Verweilzeit von 1,5 Stunden ein gasförmiges Gemisch aus Propylen und Ethylen mit einem Verhältnis zwischen dem Partialdruck des Propylens und dem des Ethylens von 35:1 polymerisiert wurde.

Nach Beendigung der Gasphasenpolymerisation erhielt man ein statisches Propylencopolymerisat mit 3,5 Gew.-% einpolymerisiertem Ethylen und einem Schmelzflußindex von 1,9 g/10 min., bei 230°C und 2,16 kg (nach DIN 53 735)

### Vergleichsbeispiel B

Es wurde analog zum erfindungsgemäßen Beispiel 2 Propylen und Ethylen mit dem gleichen Katalysatorsystem und unter den gleichen Bedingungen polymerisiert, wobei aber eine solche titanhaltige Feststoffkomponente a) verwendet wurde, die ein granuläres Kieselgel mit folgenden Eigenschaften aufwies:

| | |
|---|---|
| Teilchendurchmesser | 20 bis 45 µm |
| Porenvolumen | 1,8 cm³/g |
| spezifische Oberfläche | 325 m²/g |
| Anteil der Hohlräume und Kanäle am Gesamtpartikel | < 1,0 % |

Nach Beendigung der Gasphasenpolymerisation erhielt man ein statistisches Propylencopolymerisat mit 3,4 Gew.-% einpolymerisiertem Ethylen und einem Schmelzflußindex von 2,0 g/10 min., bis 230°C und 2,16 kg (nach DIN 53 735).

### Beispiel 3

Analog dem erfindungsgemäßen Beispiel 1 wurde im Gasphasenreaktor bei einer Temperatur von 70°C und bei einem Druck von 20 bar ein Gemisch aus Propylen, Ethylen und But-1-en polymerisiert. Das Partialdruckverhältnis von Propylen zu Ethylens und But-1-en betrug dabei 20:1,0:0,9, die mittlere Verweilzeit des Reaktionsgemisches lag bei 1,5 Stunden.

Nach Beendigung der Gasphasenpolymerisation erhielt man ein statisches Propylencopolymerisat mit 4,0 Gew.-% einpolymerisiertem Ethylen und 2,1 Gew.-% einpolymerisiertem But-1-en. Der Schmelzflußindex (HLMI) dieses statischen Propylencopolymerisats lag bei 105 g/10 min, bei 230°C und 21,6 kg (nach DIN 53 735).

### Vergleichsbeispiel C

Es wurde analog zum erfindungsgemäßen Beispiel 2 Propylen und Ethylen mit dem gleichen Katalysatorsystem und unter den gleichen Bedingungen polymerisiert, wobei aber eine solche titanhaltige Feststoffkomponente a) verwendet wurde, die ein granuläres Kieselgel mit folgenden Eigenschaften aufwies:

| | |
|---|---|
| Teilchendurchmesser | 20 bis 45 µm |
| Porenvolumen | 1,8 cm³/g |
| spezifische Oberfläche | 325 m²/g |
| Anteil der Hohlräume und Kanäle am Gesamtpartikel | < 1,0 % |

Nach Beendigung der Gasphasenpolymerisation erhielt man ein statistisches Propylencopolymerisat mit 3,9 Gew.-% einpolymerisiertem Ethylen und 2,0 Gew.-% einpolymerisiertem But-1-en. Der Schmelzflußindex (HLMI) dieses statistischen Propylencopolymerisats lag bei 120 g/10 min, bei 230°C und 21,6 kg (nach DIN 53 735)

In der nachfolgenden Tabelle sind sowohl für die erfindungsgemäßen Beispiele 1 bis 3 als auch für die Vergleichsbeispiele A bis C die Produktivität des eingesetzten Katalysatorsystems als auch die folgenden Eigenschaften der jeweils erhaltenen statistischen Propylencopolymerisats aufgeführt: xylollöslicher Anteil (Maß für die Stereospezifität des Polymerisats), Steifigkeit (G-Modul) und Schmelzflußindex.

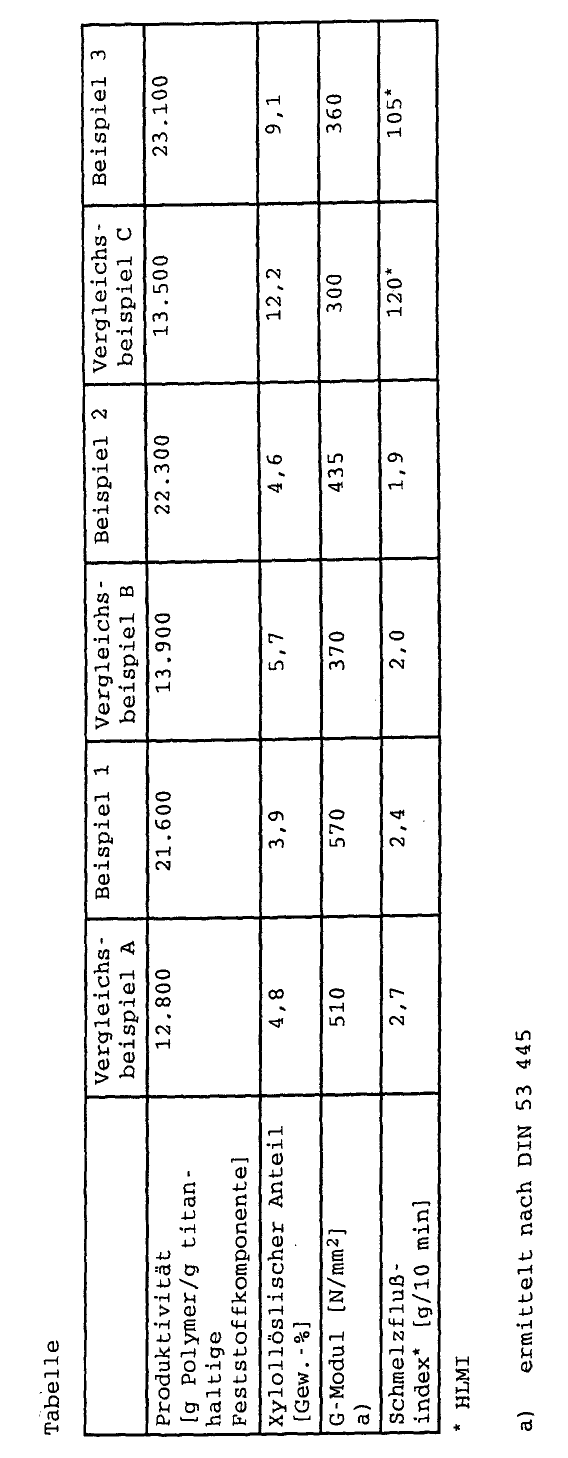

Ein Vergleich zwischen den erfindungsgemäßen Beispielen 1 bis 3 und den Vergleichsbeispielen A bis C macht deutlich, daß das erfindungsgemäße Verfahren eine höhere Produktivität aufweist und zu statistischen Propylencopolymerisaten mit einer erhöhten Stereospezifität (geringe xylollösliche Anteile) und einer erhöhten Steifigkeit (höherer G-Modul) führt.

## Patentansprüche

1. Verfahren zur Herstellung von statistischen Propylencopolymerisaten mit einpolymerisierten C₂-C₁₀-Alk-1-enen, erhältlich durch Polymerisation von Propylen und C₂-C₁₀-Alk-1-enen in Gegenwart eines Ziegler-Natta-Katalysatorsystems aus einer titanhaltigen Feststoffkomponente a), die eine Verbindung des Magnesiums, ein Halogen, Kieselgel als Träger und einen Carbonsäureester als Elektronendonorverbindung aufweist, sowie als Cokatalysatoren eine Aluminiumverbindung b) und eine weitere Elektronendonorverbindung c) enthält, wobei man bis Temperaturen im Bereich von 50 bis 100°C, Drücken im Bereich von 15 bis 40 bar und mittleren Verweilzeiten von 0,5 bis 5 Stunden Propylen und die C₂-C₁₀-Alk-1-ene miteinander polymerisiert, **dadurch gekennzeichnet, daß** man ein Partialdruckverhältnis zwischen Propylen und den oder den C₂-C₁₀-Alk-1-enen von 2:1 bis 100:1 einstellt und ein Kieselgel als Träger der titanhaltigen Feststoffkomponente verwendet, welches einen mittleren Teilchendurchmesser von 5 bis 200 µm, einen mittleren Teilchendurchmesser der Primärpartikel von 1 bis 10 µm und Hohlräume bzw. Kanäle mit einem mittleren Durchmesser von 1 bis 10 µm aufweist, deren makroskopischer Volumenanteil am Gesamtpartikel im Bereich von 5 bis 20 % liegt.

2. Verfahren nach Anspruch 1, **dadurch gekennzeichnet, daß** man die Polymerisation bei mittleren Verweilzeiten von 0,5 bis 3 Stunden durchführt.

3. Verfahren nach Anspruch 1, **dadurch gekennzeichnet, daß** man als C₂-C₁₀-Alk-1-en Ethylen verwendet.

4. Verfahren nach Anspruch 1, **dadurch gekennzeichnet, daß** man als C₂-C₁₀-Alk-1-en ein Gemisch aus Ethylen und But-1-en verwendet.

## Claims

1. A process for preparing random propylene copolymers containing copolymerized C₂-C₁₀-alk-1-enes obtainable by polymerization of propylene and C₂-C₁₀-alk-1-enes in the presence of a Ziegler-Natta catalyst system comprising a titanium-containing solid component a), comprising a compound of magnesium, a halogen, silica gel as support and a carboxylic acid ester as electron donor compound, and also as cocatalysts an aluminum compound b) and a further electron donor compound c), wherein propylene and the C₂-C₁₀-alk-1-enes are polymerized with one another at temperatures from 50 to 100°C, pressures in the range from 15 to 40 bar and mean residence times of from 0.5 to 5 hours, **characterized in that** a partial pressure ratio of propylene to the C₂-C₁₀-alk-1-ene(s) from 2:1 to 100:1 is used, and the support of the titanium-containing solid component used is a silica gel which has a mean particle diameter of from 5 to 200 µm, a mean particle diameter of the primary particles of from 1 to 10 µm and voids or channels having a mean diameter of from 1 to 10 µm, of which the macroscopic proportion by volume based on the total particle is in the range from 5 to 20%.

2. A process according to claim 1, **characterized in that** the polymerization is carried out at mean residence times of from 0.5 to 3 hours.

3. A process according to claim 1, **characterized in that** ethylene is used as C₂-C₁₀-alk-1-ene.

4. A process according to claim 1, **characterized in that** a mixture of ethylene and 1-butene is used as C₂-C₁₀-alk-1-ene.

## Revendications

1. Procédé pour la préparation de copolymères statistiques de propylène avec des alc-1-ènes en C₂ à C₁₀ copolymérisés, pouvant être obtenus par polymérisation de propylène et d'alc-1-ènes en C₂ à C₁₀ en présence d'un système de catalyseurs de Ziegler-Natta constitué d'un composant de substance solide contenant du titane a), qui présente un composé du magnésium, un halogène, du gel de silice comme support et un ester d'acide carboxylique comme composé donneur d'électrons, et comme cocatalyseur un composé d'aluminium b) et un autre composé c) donneur d'électrons, dans lequel on polymérise ensemble jusqu'à des températures dans la gamme de 50 à 100 °C, des pressions dans la gamme de 15 à 40 bar et des temps de séjour moyens de 0,5 à 5 heures du propylène et les alc-1-ènes en C₂ à C₁₀, **caractérisé en ce que** l'on règle un rapport de pressions partielles entre le polypropylène et le ou les alc-1-ènes en C₂ à C₁₀ de 2:1 à 100:1 et on utilise un gel de silice comme support du composant de substance solide contenant du titane, qui présente un diamètre moyen de particules de 5 à 200 µm, un diamètre moyen de particules des particules primaires de 1 à 10 µm et des espaces creux ou des canaux ayant un diamètre moyen de 1 à 10 µm, dont la proportion macroscopique en volume dans l'ensemble de la particule se situe dans la gamme de 5 à 20%.

2. Procédé selon la revendication 1, **caractérisé en ce que** l'on réalise la polymérisation à des temps de séjour moyens de 0,5 à 3 heures.

3. Procédé selon la revendication 1, **caractérisé en ce que** l'on utilise l'éthylène comme alc-1-ène en C₂ à C₁₀.

4. Procédé selon la revendication 1, **caractérisé en ce que** l'on utilise comme alc-1-ène en C₂ à C₁₀ un mélange d'éthylène et de but-1-ène.
